# EUROPÄISCHE PATENTSCHRIFT

(11) **EP 4 130 898 B1**
(45) Veröffentlichungstag und Bekanntmachung des Hinweises auf die Patenterteilung: **27.09.2023**
(21) Anmeldenummer: 22181444.5
(22) Anmeldetag: 28.06.2022
(51) Int. Cl.: G05B 19/048, G05B 19/05, G05B 19/042

(54) **SICHERHEITSSYSTEM UND VERFAHREN MIT EINEM SICHERHEITSSYSTEM**
SAFETY SYSTEM AND METHOD WITH A SAFETY SYSTEM
SYSTÈME DE SÉCURITÉ ET PROCÉDÉ POUR UN SYSTÈME DE SÉCURITÉ

(30) Priorität: 04.08.2021 DE 102021120328
(43) Veröffentlichungstag der Anmeldung: 08.02.2023
(73) Patentinhaber: SICK AG, 79183 Waldkirch (DE)
(72) Erfinder: Hofmann, Christoph, 79108 Freiburg (DE); Ramachandra, Sanketh, 79183 Waldkirch (DE)

(56) Entgegenhaltungen:
- EP-A1- 2 660 750
- EP-A1- 3 709 106

## Beschreibung

Die vorliegende Erfindung betrifft ein Sicherheitssystem gemäß dem Oberbegriff von Anspruch 1 und ein Verfahren mit einem Sicherheitssystem gemäß dem Oberbegriff von Anspruch 5.

Sicherheitssysteme nach dem Stand der Technik steuern Maschinen lediglich aufgrund von aktuellen Eingängen bzw. Eingangsvariablen, die einer Momentaufnahme der Eingänge entsprechen. Eingangsdaten aus der Vergangenheit sind beispielsweise nicht verfügbar.

Weiter besitzen Steuerungen oder Sicherheitssteuerungen nur sehr begrenzte Speicher und Arbeitsspeicher, um die aktuellen Eingangsvariablen zu verarbeiten. Speicherdaten aus der Vergangenheit sind beispielsweise nicht verfügbar.

Die EP 2 660 750 A1 offenbart ein System, wobei das System einen Controller und eine Zertifizierungsstelle umfasst. Der Controller ist konfiguriert, um einen Prozess zu steuern. Die Zertifizierungsstelle ist konfiguriert, um Zertifikate auszustellen und zu widerrufen, wobei der Controller konfiguriert ist, um die Zertifizierungsstelle zu verwenden, um einen Benutzer gegenseitig zu authentifizieren, um in einen sicheren Betriebsmodus einzutreten.

Die EP 3 709 106 A1 offenbart ein Sicherheitssystem zum Absichern einer Maschine, das mindestens einen sicheren Sensor zum Erzeugen von sicheren Daten aufweist, wobei der sichere Sensor auch nicht sichere Daten erzeugt und/oder ein nicht sicherer Sensor zum Erzeugen nicht sicherer Daten vorgesehen ist, wobei das Sicherheitssystem weiterhin eine nicht sichere Auswertungseinheit zum Verarbeiten der nicht sicheren Daten sowie eine sichere Auswertungseinheit aufweist, die dafür ausgebildet ist, die nicht sichere Auswertungseinheit zu testen, indem ein Auswertungsergebnis des Verarbeitens der nicht sicheren Daten anhand der sicheren Daten überprüft wird. Dabei weisen die sicheren Daten im Vergleich zu dem Auswertungsergebnis eine geringere Genauigkeit auf und/oder sind seltener verfügbar.

Eine Aufgabe der Erfindung besteht darin, ein verbessertes Sicherheitssystem bereitzustellen, welches nicht nur aktuelle Eingangsvariablen verarbeiten kann.

Die Aufgabe wird gemäß Anspruch 1 gelöst durch ein Sicherheitssystem mit mindestens einem ersten Sicherheitssteuerungsteil mit einer Steuer- und Auswerteeinheit, wobei der erste Sicherheitssteuerungsteil ein lokaler Sicherheitssteuerungsteil ist, mit mindestens einem zweiten Sicherheitssteuerungsteil mit einem Steuer- und Auswerteprogramm, wobei der zweite Sicherheitssteuerungsteil ein serverbasierter Sicherheitssteuerungsteil ist, der über eine erste Schnittstelle mit dem ersten Sicherheitssteuerungsteil verbunden ist, wobei der erste Sicherheitssteuerungsteil über eine zweite Schnittstelle mit mindestens einer Maschine verbunden ist, wobei der erste Sicherheitsteuerungsteil ausgebildet ist, die Maschine über die zweite Schnittstelle anzusteuern und auszuwerten, wobei der erste Sicherheitssteuerungsteil über eine dritte Schnittstelle mit mindestens einer Datenquelle verbunden ist, wobei der erste Sicherheitsteuerungsteil ausgebildet ist, die Datenquelle über die dritte Schnittstelle anzusteuern und auszuwerten, wobei der zweite Sicherheitssteuerungsteil über eine vierte Schnittstelle mit mindestens der Maschine verbunden ist, wobei der zweite Sicherheitsteuerungsteil ausgebildet ist, die Maschine über die vierte Schnittstelle anzusteuern und auszuwerten, wobei der zweite Sicherheitssteuerungsteil eine Testeinheitfür zyklische Tests des ersten Sicherheitssteuerungsteils aufweist und zwischen dem zweiten Sicherheitssteuerungsteil und dem ersten Sicherheitssteuerungsteil eine Testschnittstelle angeordnet ist.

Die Aufgabe wird weiter gemäß Anspruch 5 gelöst mit einem Verfahren mit einem Sicherheitssystem, mit mindestens einem ersten Sicherheitssteuerungsteil mit einer Steuer- und Auswerteeinheit, wobei der erste Sicherheitssteuerungsteil ein lokaler Sicherheitssteuerungsteil ist, mit mindestens einem zweiten Sicherheitssteuerungsteil mit einem Steuer- und Auswerteprogramm, wobei der zweite Sicherheitssteuerungsteil ein serverbasierter Sicherheitssteuerungsteil ist, der über eine erste Schnittstelle mit dem ersten Sicherheitssteuerungsteil verbunden ist, wobei der erste Sicherheitssteuerungsteil über eine zweite Schnittstelle mit mindestens einer Maschine verbunden ist, wobei der erste Sicherheitsteuerungsteil die Maschine über die zweite Schnittstelle ansteuert und auswertet, wobei der erste Sicherheitssteuerungsteil über eine dritte Schnittstelle mit mindestens einer Datenquelle verbunden ist, wobei der erste Sicherheitsteuerungsteil die Datenquelle über die dritte Schnittstelle ansteuert und auswertet, wobei der zweite Sicherheitssteuerungsteil über eine vierte Schnittstelle mit mindestens der Maschine verbunden ist, wobei der zweite Sicherheitsteuerungsteil die Maschine über die vierte Schnittstelle ansteuert und auswertet, wobei der zweite Sicherheitssteuerungsteil eine Testeinheit für zyklische Tests des ersten Sicherheitssteuerungsteils aufweist und zwischen dem zweiten Sicherheitssteuerungsteil und dem ersten Sicherheitssteuerungsteil eine Testschnittstelle angeordnet ist.

Gemäß der Erfindung wird ein leistungsfähiger und skalierbarer serverbasierter zweiter Sicherheitssteuerungsteil bereitgestellt. Dieser zweite Sicherheitssteuerungsteil bildet einen zweiten Kanal zum ersten Sicherheitssteuerungsteil. Damit ist aus erstem Sicherheitssteuerungsteil und zweitem Sicherheitssteuerungsteil ein zweikanaliges Sicherheitssystem gebildet. Der erste Sicherheitssteuerungsteil und der zweite Sicherheitssteuerungsteil sind dabei räumlich getrennt und voneinander unabhängig eigenständig betreibbar.

Eine Steuerung und Auswertung findet sowohl im ersten Sicherheitssteuerungsteii und auch parallel im zweiten Sicherheitssteuerungsteil statt.

Dadurch, dass der zweite Sicherheitssteuerungsteil serverbasiert ist, können mit dem zweiten Sicherheitssteuerungsteil rechenintensive Analysen durchgeführt werden. Der zweite Sicherheitssteuerungsteil kann hierzu eine virtuelle-Anwendung bzw. eine virtuelle Maschine bilden, welcher beliebige verfügbare Rechenkapazitäten zuordenbar bzw. zuweisbar sind. Damit kann die Leistungsfähigkeit des zweiten Sicherheitssteuerungsteils eingestellt und skaliert werden.

Damit kann das Sicherheitssystem an die notwendigen Aufgaben und die notwendigen Reche nka pazitäten angepasst werden.

Das Sicherheitssystem bildet eine hochverfügbare System archttektur, da der zweite Sicherheitssteuerungsteil serverbasiert, beispielsweise hardwarebasiert oder beispielsweise virtuell ist und somit hoch verfügbar und sehr leistungsfähig ist.

Bei der Datenquelle kann es sich beispielsweise um eine Datenbank, ein Eingabegerät oder bevorzugt um einen Sensor handeln. Bei dem Sensor kann es sich um einen ortsauflösenden Sensor handeln. Beispielsweise kann es sich bei dem Sensor um ein Lichtgitter, einen Laserscanner, eine 3D-Kamera oder ähnliches handeln. Der Sensor ist beispielsweise zurflächigen oder räumlichen Überwachung eines Überwachungsbereiches oder Schutzfeldes ausgebildet.

Gemäß der Erfindung weist der zweite Sicherheitssteuerungsteil eine Testeinheit für zyklische Tests des ersten Sicherheitssteuerungsteils auf und zwischen dem zweiten Sicherheitssteuerungsteil und dem ersten Sicherheitssteuerungsteil ist eine Testschnittstelle angeordnet.

Die Testeinheit bildet beispielsweise eine 'Watchdog'- bzw. eine 'Wachhund'- Funktion für den ersten Sicherheitssteuerungsteil. Der zwei Sicherheitssteuerungsteil schickt beispielsweise eine zyklische Testnachricht über die Testschnittstelle an das erste Sicherheitssteuerungsteil. Wird die Testnachricht von dem ersten Sicherheitssteuerungsteil innerhalb eines vorgegebenen Prüfzeitraums beantwortet, ist nachgewiesen, dass der erste Sicherheitssteuerungsteil noch bestimmungsgemäß funktioniert Damit kann die bestimmungsgemäße Funktion des ersten Sichertieitssteuerungsteils durch das zweite Sicherheitssteuerungsteil überprüft werden. Die Testschnittstelle ist bidirektional ausgebildet.

In Weiterbildung der Erfindung weist der erste Sicherheitssteuerungsteil Sicherheitsfunktionsblöcke auf.

Die Sicherheitsfunktionsblöcke bilden das Sicherheitsprogramm, das im ersten Sicherheitssteuerungsteil speicherbar und programmierbar ist. Die Sicherheitsfunktionsblöcke sind beispielsweise vordefinierte Funktionen und Programmteile, die Teil des Sicherheitsprogramms sind. Das Sicherheitsprogramm kann beispielsweise mit einem Programmiergerät oder einem PC erstellt werden.

In Weiterbildung der Erfindung weist der erste Sicherheitssteuerungsteil einen Kurzzeitspeicher auf und zwischen dem ersten Sicherheitssteuerungsteil und dem zweiten Sicherheitssteuerungsteil ist eine Schnittstelle zur Übertragung von Analysedaten des ersten Sicherheitssteuerungsteils angeordnet.

In dem Kurzzeitspeicher werden Analysedaten zwischengespeichert, welche der erste Sicherheitssteuerungsteil erzeugt. Bei den Analysedaten kann es sich um erzeugte Daten der Sensoren, um erzeugte Daten der Maschine und um erzeugte Daten des ersten Sicherheitssteuerungsteils handeln. Bei den Analysedaten kann es sich ebenfalls um erzeugte Daten während der Ausführung des Sicherheitsprogramms handeln. Die erzeugten Analysedaten werden beispielsweise zyklisch regelmäßig über die Schnittstelle zur Übertragung von Analysedaten an den zweiten Sicherheitssteuerungsteil übertragen.

In Weiterbildung der Erfindung weist der zweite Sicherheitssteuerungsteil eine Analyseeinheit und einen Langzeit-Historienspeicher auf und zwischen dem zweiten Sicherheitssteuerungsteil und dem ersten Sicherheitssteuerungsteil ist eine Schnittstelle zur Übertragung von Sicherheitseinstellungen des ersten Sicherheitssteuerungsteils angeordnet.

In dem Langzeit-Historienspeicher werden die Analysedaten des ersten Sicherheitssteuerungsteils gespeichert und mittels der Analyseeinheit ausgewertet. Die Analyseeinheit des zweiten Sicherheitssteuerungsteils ist leistungsfähig und ausgebildet, die Analysedaten eines längeren Zeitraums zu analysieren und auszuwerten. Bei den Analysedaten kann es sich um erzeugte Daten der Datenquelle, beispielsweise von Sensoren, um erzeugte Daten der Maschine und um erzeugte Daten des ersten Sicherheitssteuerungsteils handeln, die über einen längeren Zeitraum, beispielsweise über Stunden, über Tage, über Monate oder sogar über Jahre gesammelt wurden und durch die Analyseeinheit auswertbar sind. So können beispielsweise Eingriffe in die Schutzfelder von Sensoren, die Aktivitäten der Maschine und die Aktionen des Sicherheitsprogramms über einen Zeitraum ausgewertet werden. Es liegt damit eine Vielzahl von Prozessdaten zu unterschiedlichen Zeitpunkten vor und damit ein Verhalten der gesamten Anwendung über die Vergangenheit vor. Beispielsweise kann festgestellt werden, wie häufig in der Vergangenheit die Schutzfelder der Sensoren unterbrochen wurden, ob diese überhaupt unterbrochen wurden oder ob beispielsweise ein sehr häufiger Eingriff in Schutzfelder stattgefunden hat. Hierdurch kann auch der Zeitpunkt und eine Häufigkeit von Schutzfeldunterbrechungen ausgewertet werden.

Dadurch kann ein Sicherheitslevel dynamisch angepasst werden. Sind beispielsweise aus der Historie heraus in einem bestimmten Zeitraum kaum Schutzfeldunterbrechungen aufgetreten oder ist in einem bestimmten Zeitraum die Maschine nur wenig oder gar nicht aktiv, so kann ein Sicherheitslevel des Sicherheitssystems verringert werden. Sind beispielsweise aus der Historie heraus in einem bestimmten Zeitraum viele Schutzfeldunterbrechungen aufgetreten oder ist in einem bestimmten Zeitraum die Maschine sehr häufig aktiv oder ständig aktiv, so kann ein Sicherheitslevel des Sicherheitssystems erhöht werden. Der einzustellende Sicherheitslevel wird dann über die Schnittstelle zur Übertragung von Sicherheitseinstellungen an den ersten Sicherheitssteuerungsteil übertragen oder übermittelt.

Damit ist ein skalierbares und ankündbares Sicherheitslevel ermöglicht, welches auf historischen Anwendungsdaten basiert.

Die Anwendungsdaten von dem ersten Sicherheitssteuerungsteil werden also im zweiten Sicherheitssteuerungsteil gespiegelt, wodurch im zweiten Sicherheitssteuerungsteil ein Logbuch zu den Anwendungsdaten geführt wird.

Insbesondere wird eine historische Anforderungsrate einer gegebenen Sicherheitsfunktion analysiert.

Ein Element ist die Bestimmung der Sicherheitsanforderungsstufe ("Safety Integrity Level" - SIL; es gibt SIL 1 bis SIL 4). Diese ist ein Maß für die notwendige bzw. erreichte risikomindernde Wirksamkeit von Sicherheitsfunktionen. Die geringsten Anforderungen nach der Norm IEC 61508 stellt SIL 1. Wenn nach der Entwicklung sicherheitsbezogener Systeme gezeigt werden kann, dass für die Sicherheitsfunktionen die Anforderungen für eine SIL erfüllt werden, dient die SIL als Maß für die Wirksamkeit der Sicherheitsfunktionen. Da die Wirksamkeit sowohl durch die Zuverlässigkeit der Ausübung der Sicherheitsfunktion im Gefährdungsfall als auch durch unmittelbare Abschaltung der gefahrverursachenden Systeme im Falle einer Fehlererkennung in den sicherheitsbezogenen Systemen auch außerhalb von Gefährdungssituationen erreicht werden kann, darf nicht allein von "Zuverlässigkeit" der Sicherheitsfunktion gesprochen werden. Die notwendige SIL kann durch eine Gefährdungs- und Risikoanalyse ermittelt werden. SIL1, SIL2 oder SIL 3 sind übliche Sicherheitsanforderungsstufen für das vorliegende Sicherheitssystem.

Als wesentliche Parameter für die Zuverlässigkeit der Sicherheitsfunktion von Sicherheitssystemen werden die Berechnungsgrundlagen für PFH (probability of dangerous failure per hour - Wahrscheinlichkeit des gefahrbringenden Versagens pro Stunde) und PFD (probability of dangerous failure on demand - Wahrscheinlichkeit eines gefahrbringenden Versagens bei Anforderung) geliefert. Ersterer bezieht sich auf High-Demand-Systeme, also solche mit einer hohen Anforderungsrate ("hoch": mindestens eine Anforderung pro Jahr), letzterer auf Low-Demand-Systeme, die während ihrer Betriebsdauer seltener als einmal jährlich betätigt werden. Letztere sind vornehmlich in der Prozessindustrie von Bedeutung, wobei für diesen Industriezweig die weitergehende IEC 61511 heranzuziehen ist. Die besondere Problematik einer Low-Demand-Anwendung besteht darin, dass die allermeisten Sicherheitssysteme, die eine Sicherheitsfunktion ausüben, durch den regelmäßigen Zustandswechsel ihrer Schaltglieder (morgendliches Einschalten im Betrieb, abendliches Ausschalten) eine interne Diagnose durchführen, dieser Zustandswechsel aber in manchen Anlagen nicht gewährleistet ist, die über Monate oder Jahre dauerhaft in Betrieb sind.

Die Wahrscheinlichkeit einzelner Ausfälle steigt proportional mit der Anzahl der in Verkehr befindlichen Produkte und deren Alterung, wobei Ausfälle, deren Ursachen systematischer Art sind (z. B. Fehler in der Software, fehlerhafte Dimensionierung von Bauteilen, fehlerhafte oder ungenaue Werkzeuge oder Messmittel) alle Produkte betreffen, während zufällige Fehler nur einen gewissen Anteil der Produkte betreffen. Systematischen Fehler, die lange Zeit unentdeckt bleiben können, weil die auslösenden Randbedingungen selten oder unwahrscheinlich sind, werden nun durch die Auswertung der Historie besonders wirksam entdeckt.

Die Ausfallarten ("Failure Modes") werden danach aufgeteilt, in welche Richtung sie gehen: "sicher" (safe) und gefahrbringend bzw. "unsicher" (dangerous). Da die Sicherheitsfunktion eines Sicherheitssystemes eindeutig beschrieben werden kann und muss, sind Zustände wie "etwas gefährlich" normativ nicht erfasst. Diese beiden Zustände werden unter Hinzunahme der Diagnose weiter aufgeschlüsselt, so dass unter den denkbaren möglichen Fehlerarten: "sicher-entdeckt" (safe-detected), "sicher-unentdeckt" (safe undetected), "unsicher-entdeckt" (dangerous-detected), "unsicher-unentdeckt" (dangerous-undetected) letztgenannte als kritisch zu bewerten sind, da sie durch die "Diagnose" unentdeckt bleiben und zu der falschen Annahme führen können, dass das Sicherheitssystem einwandfrei funktioniere. Systematische Fehler sind durch Diagnoseeinrichtungen nur unzureichend aufzudecken, da auch die Umsetzung der Diagnose selbst auf den fehlerhaften Annahmen beruhen kann, die zum systematischen Fehler führten.

"Diagnose" wird in der Norm als ein automatisch ablaufender Prozess definiert, dessen Wirksamkeit nicht vom menschlichen Zutun abhängt. (Als Beispiel mag der Selbsttest eines Not-Aus-Relais dienen, welches bei seinem Einschalten einen internen Zyklus durchläuft, welcher alle sicherheitsrelevanten Schaltglieder mit einbezieht und das Sicherheitssystem nur"freischaltet", wenn deren Funktion gewährleistet ist.). Eine Sonderform der Diagnose ist die sog. Wiederholungsprüfung ("Proof-Test"), welche in festgelegten und mathematisch berechenbaren Abständen (Proof-Test-Intervall) erfolgen muss, wenn die interne Diagnose nicht ausreichend ist, um über einen langen Zeitraum einen sicheren Betrieb zu gewährleisten. Rechnerisch gesehen ist dies dann der Fall, wenn der PFD(t)-Wert des Sicherheitssystemes das zulässige zeitliche Intervall für die jeweilige SIL verlässt. I. d. R. sind bei einem "Proof-Test" Bauteile auszutauschen, um das Sicherheitssystem in einen "Wie-neu"-Zustand zu versetzen, so dass der PFD(t)-Wert wieder in einen unterkritischen Bereich absinkt. Für einfache Sicherheitssysteme wird es aus wirtschaftlichen Gründen in der Praxis angestrebt, das Proof-Test-Intervall mindestens so groß wie die Lebensdauer des Sicherheitssystemes auszulegen.

Aus den Parametern PFH und PFD sowie einigen anderen hier nicht näher betrachteten Werten lässt sich die SIL ablesen bzw. berechnen. Des Weiteren wird der SFF (Anteil sicherer Ausfälle, engl. Safe Failure Fraction) eingeführt, ein Maß dafür, welcher Anteil aller denkbaren Fehler in die sichere Richtung geht. Als "Fehler" werden generell nur solche Ausfälle betrachtet, die durch Alterungsprozesse oder Umwelteinflüsse bei einem Betrieb innerhalb der spezifizierten Betriebsparameter entstehen können. Manipulation oder nicht sachgemäße Anwendung sind nicht Gegenstand der Fehlerbetrachtung, die in einer sog. FMEA (Failure Modes and Effects Analysis) oder FMEDA (Failure Modes, Effects and Diagnostics Analysis) stattfindet.

Allgemein kann gesagt werden, dass zwei- oder mehrkanalige Systeme, wie vorliegend der Fall, bei denen jeder Kanal für sich allein die Sicherheitsfunktion auslösen kann, mit weniger technischem Aufwand eine höhere SIL erreichen können als solche, die nur einen Kanal besitzen. Als Kanal wird dabei der Informationsfluss durch eine Sicherheitskette (Safety-Loop) bezeichnet, angefangen von der Anforderung der Sicherheitsfunktion (z. B. durch einen Sensor, Näherungsmelder, Lichtschranke oder Taster), endend mit dem Aktor bzw. Stellglied, welches den sicheren Zustand einer Maschine einleitet.

Die Ausgabe der Analysefunktion von dem zweiten Sicherheitssteuerungsteil bzw. in der Cloud kann auf Basis der historischen Anwendungsdaten einen Vorhersagedienst für den ersten Sicherheitssteuerungsteil bzw. einen Edge-Controller anbieten.

Das Logbuch, welches beispielsweise in dem zweiten Sicherheitssteuerungsteil gebildet wird, könnte auch für juristische Zwecke verwendet werden, ähnlich einem Blackbox-Recorder bei einem Flugzeug.

Im Folgenden werden beispielsweise vier unterschiedliche Fälle bzw. vier unterschiedliche Betriebsarten des Sicherheitssystems betrachtet.

### Erster Fall:

Es liegt eine niedrige historische Anforderungsrate einer gegebenen Sicherheitsfunktion des Sicherheitssystems vor. Die Sicherheitsfunktionalität des ersten Sicherheitssteuerungsteils ist gegeben bzw. aktiv. Das Sicherheitssystem arbeitet in einem Normalbetrieb mit ausreichend niedrigem Sicherheitsniveau.

### Die laufenden Funktionen sind hierbei:

Es erfolgt eine ständige Aktualisierung des Historienspeichers bzw. des Logbuchs für die Analytik.

Ein Vorankündigungs- und Vorhersagedienst für den ersten Sicherheitssteuerungsteil zur Skalierung der Sicherheit erfolgt auf der Schnittstelle zur Übertragung von Sicherheitseinstellungen auf den ersten Sicherheitssteuerungsteil.

Der zweite Sicherheitssteuerungsteil bildet einen Hardware-redundanten Testkanal, der durch paralleles Rechnen in dem zweiten Sicherheitssteuerungsteil bzw. in der Cloud eine zusätzliche Ebene der Diagnose bildet. Die Maschine wird durch das erste Sicherheitssteuerungsteil gesteuert. Der zweite Sicherheitssteuerungsteil ist somit ein Supervisor.

### Zweiter Fall:

Es liegt eine niedrige historische Anforderungsrate einer gegebenen Sicherheitsfunktion des Sicherheitssystems vor. Die Sicherheitsfunktionalität des ersten Sicherheitssteuerungsteils ist jedoch nicht gegeben bzw. nicht aktiv. Das Sicherheitssystem arbeitet in einem eingeschränkten Brückenmodus.

### Die ständigen oder laufenden Funktionen sind hierbei:

Es erfolgt eine ständige Aktualisierung des Historienspeichers bzw. des Logbuchs für die Analytik. Die historischen Daten und die Prozessinformationen liefern eine qualitative Bewertung des Ausfalls des Sicherheitsfunktionsblocks bzw. der Sicherheitsfunktionsblöcke. Ein vorübergehender Ausfall des Sicherheitsfunktionsblocks bzw. der Sicherheitsfunktionsblöcke kann in dieser Betriebsart des Sicherheitssystems toleriert werden. Diese Betriebsart sorgt für eine zusätzliche Systemproduktivität bei historisch niedrigen Anforderungsraten der Sicherheitsfunktion.

Ein Verlust oder Ausfall des Sicherheitsfunktionsblocks bzw. der Sicherheitsfunktionsblöcke auf dem ersten Sicherheitssteuerungsteil könnte durch das zweite Sicherheitssteuerungsteil bzw. den Cloud-Dienst überbrückt werden, bis eine neue Instanz eines Sicherheitsfunktionsblocks auf dem ersten Sicherheitssteuerungsteil gestartet werden kann, mit beispielsweise niedrigeren Sicherheitsstufen, zum Beispiel mit einer geringen Testfrequenz. Nach dem Ausfall des Sicherheitsfunktionsblocks liegt somit temporär nur noch ein einkanaliges Sicherheitssystem vor, was jedoch zeitweise ausreichend ist.

Die Systemausgabe des Sicherheitssystems an die Maschine wird dann durch den zweiten Sicherheitssteuerungsteil bzw. den Cloud-Dienst gesteuert, da der erste Sicherheitssteuerungsteil bzw. die Edge-Funktionalität temporär nicht gegeben ist. Eine Latenzzeit ist dabei akzeptabel, da die Nachfragerate auf der Grundlage historischer Daten gering ist. Die Systemproduktivität bleibt vorteilhaft bestehen, da das Sicherheitssystem die Maschine nicht stoppen muss.

### Dritter Fall:

Es liegt eine hohe historische Anforderungsrate einer gegebenen Sicherheitsfunktion des Sicherheitssystems vor. Die Sicherheitsfunktionalität des ersten Sicherheitssteuerungsteils bzw. des Edge Controllers ist gegeben bzw. aktiv. Das Sicherheitssystem arbeitet in einem Betriebsmodus im Normalbetrieb mit ausreichend hohem Sicherheitsniveau.

### Die laufenden Funktionen sind hierbei:

Es erfolgt eine ständige Aktualisierung des Historienspeichers bzw. des Logbuchs für die Analytik. Ein Vorankündigungs- und Vorhersagedienst für den ersten Sicherheitssteuerungsteil zur Skalierung der Sicherheit erfolgt auf der Schnittstelle zur Übertragung von Sicherheitseinstellungen auf den ersten Sicherheitssteuerungsteil.

Der zweite Sicherheitssteuerungsteil bildet einen Hardware-redundanten Testkanal, der durch paralleles Rechnen in dem zweiten Sicherheitssteuerungsteil bzw. in der Cloud eine zusätzliche Ebene der Diagnose bildet. Die Maschine wird durch den ersten Sicherheitssteuerungsteil gesteuert. Der zweite Sicherheitssteuerungsteil ist somit ein Supervisor.

### Vierter Fall:

Es liegt eine hohe historische Anforderungsrate einer gegebenen Sicherheitsfunktion des Sicherheitssystems vor. Die Sicherheitsfunktionalität des ersten Sicherheitssteuerungsteils bzw. des Edge Controllers ist nicht gegeben bzw. nicht aktiv. Das Sicherheitssystem befindet sich in einer Betriebsart mit Hochalarm-Modus.

### Die laufenden Funktionen sind hierbei:

Es erfolgt eine ständige Aktualisierung des Historienspeichers bzw. des Logbuchs für die Analytik. Historische Daten und Auswertungen des zweiten Sicherheitssteuerungsteils liefern eine qualitative Bewertung des Ausfalls des Sicherheitsfunktionsblocks bzw. der Sicherheitsfunktionsblöcke. Ein vorübergehender Ausfall der Sicherheitsfunktion des Sicherheitssystems kann gefährlich sein. Das Sicherheitssystem hat eine beschränkte Sicherheitsleistung. Die Latenzzeit des Sicherheitssystems ist nicht akzeptabel ist. Die Produktivität des Sicherheitssystems wird somit für die Sicherheit geopfert.

Die Analyseeinheit kann geeignete Algorithmen aufweisen, welche insbesondere auf statistischen Methoden basieren. Weiter können Methoden der künstlichen Intelligenz sowie des maschinellen Lernens in der Analyseeinheit Anwendung finden.

Vorgesehen ist der Einsatz so genannter "Recommender Systems", die ihrerseits maschinelle Lernverfahren zur Ableitung der Empfehlung nutzen. Auf Basis von Sensorsignalen der Sensoren und Prozessinformationen könnte ein Maschinenverhalten der Maschine und eine entsprechende Sicherheitsleistung dem Anwender empfohlen werden. Damit könnte eine Realisierung eines sogenannten "Behavior Driven Risk Assessment" (BDRA) erfolgen.

Weiter kann auch 'Quantencomputing' vorgesehen sein. Quantum machine learning' oder speziell ,quantum-enhanced machine learning' bezieht sich auf Quantenalgorithmen, die Aufgaben des maschinellen Lernens lösen und dabei klassische maschinelle Lernverfahren verbessern und oft beschleunigen.

Dies ist vorteilhaft, weil die maschinenlernbaren Trainingsalgorithmen trotz des rasanten theoretischen und praktischen Fortschritts zwar rechenintensiv sind, aber in dem zweiten Sicherheitssteuerungsteil implementierbar und realisierbar sind. Damit eröffnen sich neue aufregende Möglichkeiten durch das bevorstehende Aufkommen von Quantencomputern, die direkt die Gesetze der Quantenmechanik ausnutzen, um die technologischen und thermodynamischen Grenzen der klassischen Berechnung zu umgehen.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

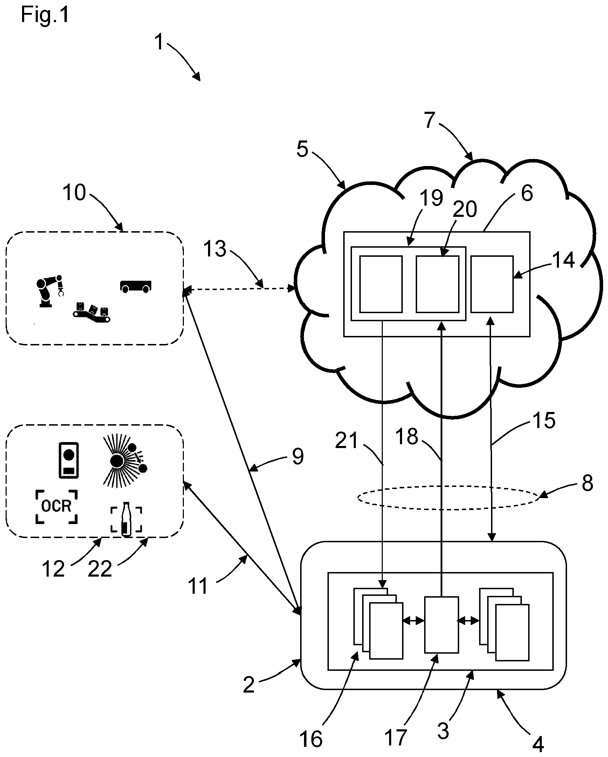

Figur 1 bis 4 jeweils ein Sicherheitssystem.

In den nachfolgenden Figuren sind identische Teile mit identischen Bezugszeichen versehen.

Figur 1 zeigt ein Sicherheitssystem 1 bzw. ein Verfahren mit einem Sicherheitssystem 1, mit mindestens einem ersten Sicherheitssteuerungsteil 2 mit einer Steuer- und Auswerteeinheit 3, wobei der erste Sicherheitssteuerungsteil 2 ein lokaler Sicherheitssteuerungsteil 4 ist, mit mindestens einem zweiten Sicherheitssteuerungsteil 5 mit einem Steuer- und Auswerteprogramm 6, wobei der zweite Sicherheitssteuerungsteil 5 ein serverbasierter Sicherheitssteuerungsteil 7 ist, der über eine erste Schnittstelle 8 mit dem ersten Sicherheitssteuerungsteil 2 verbunden ist, wobei der erste Sicherheitssteuerungsteil 2 über eine zweite Schnittstelle 9 mit mindestens einer Maschine 10 verbunden ist, wobei der erste Sicherheitsteuerungsteil 2 ausgebildet ist, die Maschine 10 über die zweite Schnittstelle 9 anzusteuern und auszuwerten, wobei der erste Sicherheitssteuerungsteil 2 über eine dritte Schnittstelle 11 mit mindestens einer Datenquelle 22 verbunden ist, wobei der erste Sicherheitsteuerungsteil 2 ausgebildet ist, die Datenquelle 22 über die dritte Schnittstelle 11 anzusteuern und auszuwerten, wobei der zweite Sicherheitssteuerungsteil 5 über eine vierte Schnittstelle 13 mit mindestens der Maschine 10 verbunden ist, wobei der zweite Sicherheitsteuerungsteil 5 ausgebildet ist, die Maschine 10 über die vierte Schnittstelle 13 anzusteuern und auszuwerten.

Der zweite Sicherheitssteuerungsteil 5 bildet einen zweiten Kanal zum ersten Sicherheitssteuerungsteil 2. Damit ist aus erstem Sicherheitssteuerungsteil 2 und zweitem Sicherheitssteuerungsteil 5 ein zweikanaliges Sicherheitssystem 1 gebildet. Der erste Sicherheitssteuerungsteil 2 und der zweite Sicherheitssteuerungsteil 5 sind dabei räumlich getrennt und voneinander unabhängig eigenständig betreibbar.

Eine Steuerung und Auswertung findet sowohl im ersten Sicherheitssteuerungsteil 2 und auch parallel im zweiten Sicherheitssteuerungsteil 5 statt.

Bei der Datenquelle 22 kann es sich beispielsweise um eine Datenbank, ein Eingabegerät oder bevorzugt um einen Sensor 12 handeln. Bei dem Sensor 12 kann es sich um einen ortstauflösenden Sensor handeln. Beispielsweise kann es sich bei dem Sensor 12 um ein Lichtgitter, einen Laserscanner, eine 3D-Kamera oder ähnliches handeln. Der Sensor 12 ist beispielsweise zur flächigen oder räumlichen Überwachung eines Überwachungsbereiches oder Schutzfeldes ausgebildet.

Gemäß Figur 1 weist der zweite Sicherheitssteuerungsteil 5 beispielsweise eine Testeinheit 14 für zyklische Tests des ersten Sicherheitssteuerungsteils 2 auf und zwischen dem zweiten Sicherheitssteuerungsteil 5 und dem ersten Sicherheitssteuerungsteil 2 ist eine Testschnittstelle 15 angeordnet.

Die Testeinheit 14 bildet beispielsweise eine ,Watchdog'- bzw. eine WachhundFunktion für den ersten Sicherheitssteuerungsteil 2. Der zwei Sicherheitssteuerungsteil 5 schickt beispielsweise eine zyklische Testnachricht über die Testschnittstelle 15 an das erste Sicherheitssteuerungsteil 2. Wird die Testnachricht von dem ersten Sicherheitssteuerungsteil 2 innerhalb eines vorgegebenen Prüfzeitraums beantwortet, ist nachgewiesen, dass der erste Sicherheitssteuerungsteil 2 noch bestimmungsgemäß funktioniert. Damit kann die bestimmungsgemäße Funktion des ersten Sicherheitssteuerungsteils 2 durch das zweite Sicherheitssteuerungsteil 5 überprüft werden. Die Testschnittstelle 15 ist bidirektional ausgebildet.

Gemäß Figur 1 weist der erste Sicherheitssteuerungsteil 2 beispielsweise Sicherheitsfunktionsblöcke 16 auf.

Die Sicherheitsfunktionsblöcke 16 bilden das Sicherheitsprogramm, das im ersten Sicherheitssteuerungsteil 2 speicherbar und programmierbar ist. Die Sicherheitsfunktionsblöcke 16 sind beispielsweise vordefinierte Funktionen und Programmteile, die Teil des Sicherheitsprogramms sind. Das Sicherheitsprogramm kann beispielsweise mit einem Programmiergerät oder einem PC erstellt werden.

Gemäß Figur 1 weist der erste Sicherheitssteuerungsteil 2 einen Kurzzeitspeicher 17 auf und zwischen dem ersten Sicherheitssteuerungsteil 2 und dem zweiten Sicherheitssteuerungsteil 5 ist eine Schnittstelle 18 zur Übertragung von Analysedaten des ersten Sicherheitssteuerungsteils angeordnet.

In dem Kurzzeitspeicher 17 werden Analysedaten zwischengespeichert, welche der erste Sicherheitssteuerungsteil 2 erzeugt. Bei den Analysedaten kann es sich um erzeugte Daten der Sensoren 12, um erzeugte Daten der Maschine 10 und um erzeugte Daten des ersten Sicherheitssteuerungsteils 2 handeln. Bei den Analysedaten kann es sich ebenfalls um erzeugte Daten während der Ausführung des Sicherheitsprogramms handeln. Die erzeugten Analysedaten werden beispielsweise zyklisch regelmäßig über die Schnittstelle 18 zur Übertragung von Analysedaten an den zweiten Sicherheitssteuerungsteil 5 übertragen.

Gemäß Figur 1 weist der zweite Sicherheitssteuerungsteil 5 eine Analyseeinheit 19 und einen Langzeit-Historienspeicher 20 auf und zwischen dem zweiten Sicherheitssteuerungsteil 5 und dem ersten Sicherheitssteuerungsteil 2 ist eine Schnittstelle 21 zur Übertragung von Sicherheitseinstellungen des ersten Sicherheitssteuerungsteils 2 angeordnet.

In dem Langzeit-Historienspeicher 20 werden die Analysedaten des ersten Sicherheitssteuerungsteils 2 gespeichert und mittels der Analyseeinheit 19 ausgewertet. Die Analyseeinheit 19 des zweiten Sicherheitssteuerungsteils 5 ist leistungsfähig und ausgebildet, die Analysedaten eines längeren Zeitraums zu analysieren und auszuwerten. Bei den Analysedaten kann es sich um erzeugte Daten der Sensoren 12, um erzeugte Daten der Maschine 10 und um erzeugte Daten des ersten Sicherheitssteuerungsteils 2 handeln, die über einen längeren Zeitraum, beispielsweise über Stunden, über Tage, über Monate und/oder sogar über Jahre gesammelt wurden und durch die Analyseeinheit 19 auswertbar sind. So können beispielsweise die Eingriffe in die Schutzfelder der Sensoren 12, die Aktivitäten der Maschine 10 und die Aktionen des Sicherheitsprogramms über einen Zeitraum ausgewertet werden. Es liegt damit eine Vielzahl von Prozessdaten zu unterschiedlichen Zeitpunkten und damit ein Verhalten der gesamten Anwendung über die Vergangenheit vor. Beispielsweise kann festgestellt werden, wie häufig in der Vergangenheit die Schutzfelder der Sensoren 12 unterbrochen wurden, ob diese überhaupt unterbrochen wurden oder ob beispielsweise ein sehr häufiger Eingriff in Schutzfelder stattgefunden hat. Damit können beispielsweise sicherheitsrelevante Ereignisse sowie Schutzfeldunterbrechungen besser analysiert und ausgewertet werden. Hierdurch kann beispielsweise auch der Zeitpunkt und eine Häufigkeit von Schutzfeldunterbrechungen ausgewertet werden. Beispielsweise kann ein Annähern von Personen von außerhalb des Schutzfelds oder ein Annähern von einen AGV, also einem autonomen Fahrzeug, ausgewertet werden.

Dadurch kann ein Sicherheitslevel des Sicherheitssystems 1 dynamisch angepasst werden. Sind beispielsweise aus der Historie heraus in einem bestimmten Zeitraum kaum Schutzfeldunterbrechungen aufgetreten oder ist in einem bestimmten Zeitraum die Maschine 10 nur wenig oder gar nicht aktiv, so kann ein Sicherheitslevel des Sicherheitssystems 1 verringert werden. Sind beispielsweise aus der Historie heraus in einem bestimmten Zeitraum viele Schutzfeldunterbrechungen aufgetreten oder ist in einem bestimmten Zeitraum die Maschine 10 sehr häufig aktiv oder ständig aktiv, so kann ein Sicherheitslevel des Sicherheitssystems 1 erhöht werden. Der einzustellende Sicherheitslevel wird dann über die Schnittstelle 21 zur Übertragung von Sicherheitseinstellungen an den ersten Sicherheitssteuerungsteil 2 übertragen oder übermittelt.

Die Anwendungsdaten von dem ersten Sicherheitssteuerungsteil 2 werden also im zweiten Sicherheitssteuerungsteil 5 gespiegelt, wodurch im zweiten Sicherheitssteuerungsteil 5 ein Logbuch zu den Anwendungsdaten geführt wird.

Insbesondere wird eine historische Anforderungsrate einer gegebenen Sicherheitsfunktion analysiert.

Die Ausgabe der Analysefunktion von dem zweiten Sicherheitssteuerungsteil 5 bzw. in der Cloud kann auf Basis der historischen Anwendungsdaten einen Vorhersagedienst für den ersten Sicherheitssteuerungsteil 2 bzw. einen Edge-Controller anbieten.

Das Logbuch, welches beispielsweise in dem zweiten Sicherheitssteuerungsteil 5 gebildet wird, könnte auch fürjuristische Zwecke verwendet werden, ähnlich einem Blackbox-Recorder bei einem Flugzeug.

Im Folgenden werden beispielsweise vier unterschiedliche Fälle bzw. vier unterschiedliche Betriebsarten des Sicherheitssystems 1 betrachtet.

### Erster Fall:

Gemäß Figur 1 liegt beispielsweise eine niedrige historische Anforderungsrate einer gegebenen Sicherheitsfunktion des Sicherheitssystems 1 vor. Die Sicherheitsfunktionalität des ersten Sicherheitssteuerungsteils 2 ist gegeben bzw. aktiv. Das Sicherheitssystem 1 arbeitet in einem Normalbetrieb mit ausreichend niedrigem Sicherheitsniveau.

### Die laufenden Funktionen sind hierbei:

Es erfolgt eine ständige Aktualisierung des Historienspeichers 20 bzw. des Logbuchs für die Analytik. Ein Vorankündigungs- und Vorhersagedienst für den ersten Sicherheitssteuerungsteil 2 zur Skalierung der Sicherheit erfolgt auf der Schnittstelle 21 zur Übertragung von Sicherheitseinstellungen auf das erste Sicherheitssteuerungsteil 2.

Der zweite Sicherheitssteuerungsteil 5 bildet einen Hardware-redundanten Testkanal, der durch paralleles Rechnen in dem zweiten Sicherheitssteuerungsteil 5 bzw. in der Cloud eine zusätzliche Ebene der Diagnose bildet. Die Maschine 10 wird durch den ersten Sicherheitssteuerungsteil 2 gesteuert. Der zweite Sicherheitssteuerungsteil 5 ist somit ein Supervisor.

### Zweiter Fall:

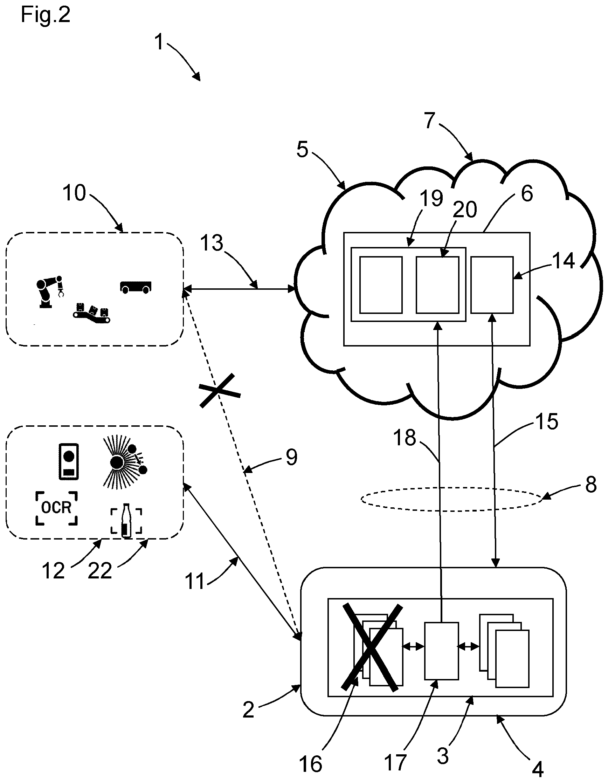

Gemäß Figur 2 liegt beispielsweise eine niedrige historische Anforderungsrate einer gegebenen Sicherheitsfunktion des Sicherheitssystems 1 vor. Die Sicherheitsfunktionalität des ersten Sicherheitssteuerungsteils 2 ist jedoch nicht gegeben bzw. nicht aktiv. Das Sicherheitssystem 1 arbeitet in einem eingeschränkten Brückenmodus.

### Die ständigen oder laufenden Funktionen sind hierbei:

Es erfolgt eine ständige Aktualisierung des Historienspeichers 20 bzw. des Logbuchs für die Analytik. Die historischen Daten und die Prozessinformationen liefern eine qualitative Bewertung des Ausfalls des Sicherheitsfunktionsblocks 16 bzw. der Sicherheitsfunktionsblöcke 16. Ein vorübergehender Ausfall des Sicherheitsfunktionsblocks 16 bzw. der Sicherheitsfunktionsblöcke 16 kann in dieser Betriebsart des Sicherheitssystems 1 toleriert werden. Diese Betriebsart sorgt für eine zusätzliche Systemproduktivität bei historisch niedrigen Anforderungsraten der Sicherheitsfunktion.

Ein Verlust oder Ausfall des Sicherheitsfunktionsblocks 16 bzw. der Sicherheitsfunktionsblöcke 16 auf dem ersten Sicherheitssteuerungsteil 2 könnte durch das zweite Sicherheitssteuerungsteil 5 bzw. den Cloud-Dienst überbrückt werden, bis eine neue Instanz eines Sicherheitsfunktionsblocks 16 auf dem ersten Sicherheitssteuerungsteil 2 gestartet werden kann, mit beispielsweise niedrigeren Sicherheitsstufen, zum Beispiel mit einer geringen Testfrequenz. Nach dem Ausfall des Sicherheitsfunktionsblocks 16 liegt somit temporär nur noch ein einkanaliges Sicherheitssystem 1 vor, was jedoch zeitweise ausreichend ist.

Die Systemausgabe des Sicherheitssystems 1 an die Maschine 10 wird dann durch den zweiten Sicherheitssteuerungsteil 5 bzw. den Cloud-Dienst gesteuert, da der erste Sicherheitssteuerungsteil 2 bzw. die Edge-Funktionalität temporär nicht gegeben ist.

Eine Latenzzeit ist dabei akzeptabel, da die Nachfragerate auf der Grundlage historischer Daten gering ist. Die Systemproduktivität bleibt vorteilhaft bestehen, da das Sicherheitssystem 1 die Maschine nicht stoppen muss.

### Dritter Fall:

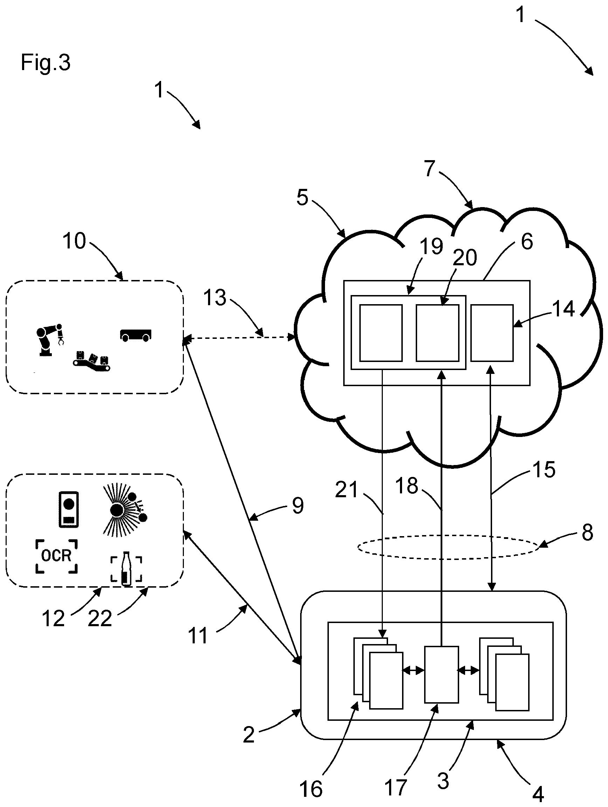

Gemäß Figur 3 liegt beispielsweise eine hohe historische Anforderungsrate einer gegebenen Sicherheitsfunktion des Sicherheitssystems 1 vor. Die Sicherheitsfunktionalität des ersten Sicherheitssteuerungsteils 2 bzw. des Edge Controllers ist gegeben bzw. aktiv. Das Sicherheitssystem 1 arbeitet in einem Betriebsmodus im Normalbetrieb mit ausreichend hohem Sicherheitsniveau.

### Die laufenden Funktionen sind hierbei:

Es erfolgt eine ständige Aktualisierung des Historienspeichers 20 bzw. des Logbuchs für die Analytik. Ein Vorankündigungs- und Vorhersagedienst für den ersten Sicherheitssteuerungsteil 2 zur Skalierung der Sicherheit erfolgt auf der Schnittstelle 21 zur Übertragung von Sicherheitseinstellungen auf den ersten Sicherheitssteuerungsteil 2.

Der zweite Sicherheitssteuerungsteil 5 bildet einen Hardware-redundanten Testkanal, der durch paralleles Rechnen in dem zweiten Sicherheitssteuerungsteil 5 bzw. in der Cloud eine zusätzliche Ebene der Diagnose bildet. Die Maschine 10 wird durch den ersten Sicherheitssteuerungsteil 2 gesteuert. Der zweite Sicherheitssteuerungsteil 5 ist somit ein Supervisor.

### Vierter Fall:

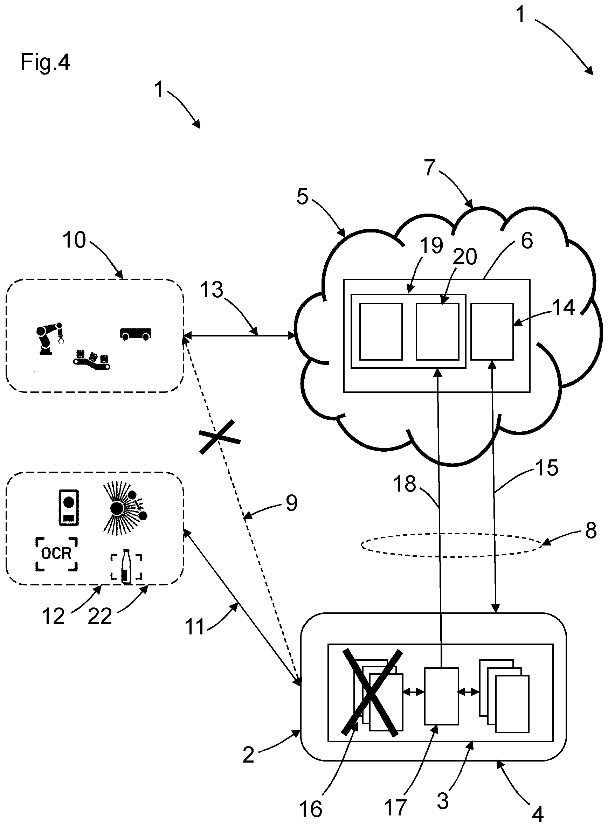

Gemäß Figur 4 liegt beispielsweise eine hohe historische Anforderungsrate einer gegebenen Sicherheitsfunktion des Sicherheitssystems 1 vor. Die Sicherheitsfunktionalität des ersten Sicherheitssteuerungsteils 2 bzw. des Edge Controllers ist nicht gegeben bzw. nicht aktiv. Das Sicherheitssystem 1 befindet sich in einer Betriebsart mit Hochalarm-Modus.

### Die laufenden Funktionen sind hierbei:

Es erfolgt eine ständige Aktualisierung des Historienspeichers 20 bzw. des Logbuchs für die Analytik. Historische Daten und Auswertungen des zweiten Sicherheitssteuerungsteils 5 liefern eine qualitative Bewertung des Ausfalls des Sicherheitsfunktionsblocks 16 bzw. der Sicherheitsfunktionsblöcke 16. Ein vorübergehender Ausfall der Sicherheitsfunktion des Sicherheitssystems 1 kann gefährlich sein. Das Sicherheitssystem 1 hat eine beschränkte Sicherheitsleistung. Die Latenzzeit des Sicherheitssystems 1 ist nicht akzeptabel ist. Die Produktivität des Sicherheitssystems 1 wird somit für die Sicherheit geopfert.

### Bezugszeichen:

1 Sicherheitssystem
2 erster Sicherheitssteuerungsteil
3 Steuer- und Auswerteeinheit
4 lokaler Sicherheitssteuerungsteil
5 zweiter Sicherheitssteuerungsteil
6 Steuer- und Auswerteprogramm
7 serverbasierter Sicherheitssteuerungsteil
8 erste Schnittstelle
9 zweite Schnittstelle
10 Maschine
11 dritte Schnittstelle
12 Sensor
13 vierte Schnittstelle
14 Testeinheit
15 Testschnittstelle
16 Sicherheitsfunktionsblöcke
17 Kurzzeitspeicher
18 Schnittstelle zur Übertragung von Analysedaten
19 Analyseeinheit
20 Langzeithistorienspeicher
21 Schnittstelle zur Übertragung von Sicherheitseinstellungen
22 Datenquelle

## Patentansprüche

1. Sicherheitssystem (1),
mit mindestens einem ersten Sicherheitssteuerungsteil (2) mit einer Steuer- und Auswerteeinheit (3), wobei der erste Sicherheitssteuerungsteil (2) ein lokaler Sicherheitssteuerungsteil (4) ist,
mit mindestens einem zweiten Sicherheitssteuerungsteil (5) mit einem Steuer- und Auswerteprogramm (6), wobei der zweite Sicherheitssteuerungsteil (5) ein serverbasierter Sicherheitssteuerungsteil (7) ist, der über eine erste Schnittstelle (8) mit dem ersten Sicherheitssteuerungsteil (2) verbunden ist,
wobei der erste Sicherheitssteuerungsteil (2) über eine zweite Schnittstelle (9) mit mindestens einer Maschine (10) verbunden ist, wobei der erste Sicherheitsteuerungsteil (2) ausgebildet ist, die Maschine (10) über die zweite Schnittstelle (9) anzusteuern und auszuwerten,
wobei der erste Sicherheitssteuerungsteil (2) über eine dritte Schnittstelle (11) mit mindestens einer Datenquelle (22) verbunden ist, wobei der erste Sicherheitsteuerungsteil (2) ausgebildet ist, die Datenquelle (22) über die dritte Schnittstelle (11) anzusteuern und auszuwerten,
wobei
der zweite Sicherheitssteuerungsteil (5) über eine vierte Schnittstelle (13) mit mindestens der Maschine (10) verbunden ist, wobei der zweite Sicherheitsteuerungsteil (5) ausgebildet ist, die Maschine (10) über die vierte Schnittstelle (13) anzusteuern und auszuwerten, **dadurch gekennzeichnet, dass** der zweite Sicherheitssteuerungsteil (5) eine Testeinheit (14) für zyklische Tests des ersten Sicherheitssteuerungsteil (2) aufweist und zwischen dem zweiten Sicherheitssteuerungsteil (5) und dem ersten Sicherheitssteuerungsteil (2) eine Testschnittstelle (15) angeordnet ist.

2. Sicherheitssystem (1) nach mindestens einem der vorhergehenden Ansprüche, **dadurch gekennzeichnet, dass** der erste Sicherheitssteuerungsteil (2) mindestens einen Sicherheitsfunktionsblock (16) aufweist.

3. Sicherheitssystem (1) nach mindestens einem der vorhergehenden Ansprüche, **dadurch gekennzeichnet, dass** der erste Sicherheitssteuerungsteil (2) einen Kurzzeitspeicher (17) aufweist und zwischen dem ersten Sicherheitssteuerungsteil (2) und dem zweiten Sicherheitssteuerungsteil (5) eine Schnittstelle (18) zur Übertragung von Analysedaten des ersten Sicherheitssteuerungsteils (2) angeordnet ist.

4. Sicherheitssystem (1) nach mindestens einem der vorhergehenden Ansprüche, **dadurch gekennzeichnet, dass** der zweite Sicherheitssteuerungsteil (2) eine Analyseeinheit (19) und einen Langzeit-Historienspeicher (20) aufweist und zwischen dem zweiten Sicherheitssteuerungsteil (5) und dem ersten Sicherheitssteuerungsteil (2) eine Schnittstelle (21) zur Übertragung von Sicherheitseinstellungen des ersten Sicherheitssteuerungsteils angeordnet ist.

5. Verfahren mit einem Sicherheitssystem (1),
mit mindestens einem ersten Sicherheitssteuerungsteil (2) mit einer Steuer- und Auswerteeinheit (3), wobei der erste Sicherheitssteuerungsteil (2) ein lokaler Sicherheitssteuerungsteil (4) ist,
mit mindestens einem zweiten Sicherheitssteuerungsteil (5) mit einem Steuer- und Auswerteprogramm (6), wobei der zweite Sicherheitssteuerungsteil (5) ein serverbasierter Sicherheitssteuerungsteil (7) ist, der über eine erste Schnittstelle (8) mit dem ersten Sicherheitssteuerungsteil (2) verbunden ist,
wobei der erste Sicherheitssteuerungsteil (2) über eine zweite Schnittstelle (9) mit mindestens einer Maschine (10) verbunden ist, wobei der erste Sicherheitsteuerungsteil (2) die Maschine (10) über die zweite Schnittstelle (9) ansteuert und auswertet,
wobei der erste Sicherheitssteuerungsteil (2) über eine dritte Schnittstelle (11) mit mindestens einer Datenquelle (22) verbunden ist, wobei der erste Sicherheitsteuerungsteil (2) die Datenquelle (22) über die dritte Schnittstelle (11) ansteuert und auswertet,
wobei
der zweite Sicherheitssteuerungsteil (5) über eine vierte Schnittstelle (13) mit mindestens der Maschine (10) verbunden ist, wobei der zweite Sicherheitsteuerungsteil (5) die Maschine (10) über die vierte Schnittstelle (13) ansteuert und auswertet, **dadurch gekennzeichnet, dass** der zweite Sicherheitssteuerungsteil (5) eine Testeinheit (14) aufweist, die zyklische Testnachrichten über eine zwischen dem zweiten Sicherheitssteuerungsteil (5) und dem ersten Sicherheitssteuerungsteil (1) angeordnete Testschnittstelle (15) an den ersten Sicherheitssteuerungsteil (2) sendet.

## Claims

1. A safety system (1)
having at least one first safety control part (2) having a control and evaluation unit (3), wherein the first safety control part (2) is a local safety control part (4);
having at least one second safety control part (5) having a control and evaluation program (6), wherein the second safety control part (5) is a server based safety control part (7) that is connected to the first safety control part (2) over a first interface (8),
wherein the first safety control part 2) is connected to at least one machine (10) over a second interface (9), with the first safety control part (2) being configured to control and to evaluate the machine (10) over the second interface (9);
wherein the first safety control part (2) is connected to at least one data source (22) over a third interface (11), with the first safety control part (2) being configured to control and to evaluate the data source (22) over the third interface (11);
wherein
the second safety control part (5) is connected to at least the machine (10) over a fourth interface (13), with the second safety control part (5) being configured to control and to evaluate the machine (10) over the fourth interface (13), **characterized in that** the second safety control part (5) has a test unit (14) for cyclic tests of the first safety control part (2); and **in that** a test interface (15) is arranged between the second safety control part (5) and the first safety control part (2).

2. A safety system (1) in accordance with at least one of the preceding claims, **characterized in that** the first safety control part (2) has at least one safety functional block (16).

3. A safety system (1) in accordance with at least one of the preceding claims, **characterized in that** the first safety control part (2) has a short-term memory (17), and **in that** an interface (18) for transmitting analysis data of the first safety control part (2) is arranged between the first safety control part (2) and the second safety control part (5).

4. A safety system (1) in accordance with at least one of the preceding claims, **characterized in that** the second safety control part (2) has an analysis unit (19) and a long-term history memory (20), and **in that** an interface (21) for transmitting safety settings of the first safety control part is arranged between the second safety control part (5) and the first safety control part (2).

5. A method having a safety system (1),
having at least one first safety control part (2) having a control and evaluation unit (3), wherein the first safety control part (2) is a local safety control part (4);
having at least one second safety control part (5) having a control and evaluation program (6), wherein the second safety control part (5) is a server based safety control part (7) that is connected to the first safety control part (2) over a first interface (8),
wherein the first safety control part (2) is connected to at least one machine (10) over a second interface (9), with the first safety control part (2) controlling and evaluating the machine (10) over the second interface (9);
wherein the first safety control part (2) is connected to at least one data source (22) over a third interface (11), with the first safety control part (2) controlling and evaluating the data source (22) over the third interface (11);
wherein
the second safety control part (5) is connected to at least the machine (10) over a fourth interface (13), with the second safety control part (5) controlling and evaluating the machine over the fourth interface (13), **characterized in that** the second safety control part (5) has a test unit (14) that transmits cyclic test messages to the first safety control pat (2) over a test interface (15) arranged between the second safety control part (5) and the first safety control part (1).

## Revendications

1. Système de sécurité (1),
comprenant au moins une première partie de commande de sécurité (2) munie d'une unité de commande et d'évaluation (3), la première partie de commande de sécurité (2) étant une partie de commande de sécurité (4) locale,
comprenant au moins une deuxième partie de commande de sécurité (5) munie d'un programme de commande et d'évaluation (6), la deuxième partie de commande de sécurité (5) étant une partie de commande de sécurité (7) basée sur le serveur, qui est reliée à la première partie de commande de sécurité (2) via une première interface (8),
la première partie de commande de sécurité (2) étant reliée à au moins une machine (10) via une deuxième interface (9), la première partie de commande de sécurité (2) étant conçue pour commander et évaluer la machine (10) via la deuxième interface (9),
la première partie de commande de sécurité (2) étant reliée à au moins une source de données (22) via une troisième interface (11), la première partie de commande de sécurité (2) étant conçue pour commander et évaluer la source de données (22) via la troisième interface (11),
dans lequel
la deuxième partie de commande de sécurité (5) est reliée à au moins la machine (10) via une quatrième interface (13), la deuxième partie de commande de sécurité (5) étant conçue pour commander et évaluer la machine (10) via la quatrième interface (13),
**caractérisé en ce que** la deuxième partie de commande de sécurité (5) présente une unité de test (14) pour des tests cycliques de la première partie de commande de sécurité (2), et une interface de test (15) est disposée entre la deuxième partie de commande de sécurité (5) et la première partie de commande de sécurité (2).

2. Système de sécurité (1) selon la revendication précédente, **caractérisé en ce que** la première partie de commande de sécurité (2) présente au moins un bloc fonctionnel de sécurité (16).

3. Système de sécurité (1) selon l'une au moins des revendications précédentes, **caractérisé en ce que** la première partie de commande de sécurité (2) présente une mémoire à court terme (17), et une interface (18) destinée à la transmission de données d'analyse de la première partie de commande de sécurité (2) est disposée entre la première partie de commande de sécurité (2) et la deuxième partie de commande de sécurité (5).

4. Système de sécurité (1) selon l'une au moins des revendications précédentes, **caractérisé en ce que** la deuxième partie de commande de sécurité (2) présente une unité d'analyse (19) et une mémoire d'historique à long terme (20), et une interface (21) destinée à la transmission de réglages de sécurité de la première partie de commande de sécurité est disposée entre la deuxième partie de commande de sécurité (5) et la première partie de commande de sécurité (2).

5. Procédé moyennant un système de sécurité (1),
comprenant au moins une première partie de commande de sécurité (2) munie d'une unité de commande et d'évaluation (3), la première partie de commande de sécurité (2) étant une partie de commande de sécurité (4) locale,
comprenant au moins une deuxième partie de commande de sécurité (5) munie d'un programme de commande et d'évaluation (6), la deuxième partie de commande de sécurité (5) étant une partie de commande de sécurité (7) basée sur le serveur, qui est reliée à la première partie de commande de sécurité (2) via une première interface (8),
la première partie de commande de sécurité (2) étant reliée à au moins une machine (10) via une deuxième interface (9), la première partie de commande de sécurité (2) commandant et évaluant la machine (10) via la deuxième interface (9),
la première partie de commande de sécurité (2) étant reliée à au moins une source de données (22) via une troisième interface (11), la première partie de commande de sécurité (2) commandant et évaluant la source de données (22) via la troisième interface (11),
dans lequel
la deuxième partie de commande de sécurité (5) est reliée à au moins la machine (10) via une quatrième interface (13), la deuxième partie de commande de sécurité (5) commandant et évaluant la machine (10) via la quatrième interface (13),
**caractérisé en ce que** la deuxième partie de commande de sécurité (5) présente une unité de test (14) qui envoie des messages de test cycliques à la première partie de commande de sécurité (2) via une interface de test (15) disposée entre la deuxième partie de commande de sécurité (5) et la première partie de commande de sécurité (1).
